**Europäisches Patentamt**

**European Patent Office**

**Office européen des brevets**

(19)

(11) Publication number: **0 117 704**
A1

(12) # EUROPEAN PATENT APPLICATION

(21) Application number: **84301100.8**

(22) Date of filing: **21.02.84**

(51) Int. Cl.³: **F 16 F 1/18, B 60 G 11/12**

(30) Priority: **24.02.83 GB 8305181**
**12.03.83 GB 8306885**

(43) Date of publication of application: **05.09.84**
**Bulletin 84/36**

(84) Designated Contracting States: **IT**

(71) Applicant: **GKN TECHNOLOGY LIMITED, Birmingham New Road, Wolverhampton WV4 6BW (GB)**

(72) Inventor: **Deville, Arthur Ernest, 54 Regina Crescent, Wolverhampton West Midlands WV6 8JG (GB)**

(74) Representative: **Dodd, Graham Marshall et al, Guest Keen and Nettlefolds plc Group Patents and Licensing Department P.O. Box 55 Ipsley House Ipsley Church Lane, Redditch Worcestershire P98 0TL (GB)**

(54) **Leaf springs of composite material.**

(57) A composite spring with a bush (14), specifically a metal-rubber-metal bush (16, 17, 18) held to an end portion (10) of the spring by a clamping member (11, 21), for receiving a mounting bolt, wherein the clamping member is projection welded to the bush to prevent movement of the bush relative to the clamping member. The use of projection welding to hold the bush and clamping member together ensures that the bush is not degraded by heat from the welding operation.

P.82.079/GMD   Leaf Springs of Composite Material

This invention relates to leaf springs made of composite, fibre reinforced resin, material. More particularly, the invention relates to means by which such a spring is secured to a motor vehicle or other apparatus or equipment where it is to be used.

It has been proposed, in EP-A-0070122, that a bush for receiving a mounting bolt or like element can be secured to a composite leaf spring by being positioned within a transverse recess at an end portion of the spring, and clamped to it by a clamping member, eg of steel. It is important that the bush is not able to move relative to the spring and clamping member in service, and the present invention aims to satisfy this requirement. It is proposed in EP-A-0070122 that the bush can interfit mechanically with the clamping member, or be adhesively secured thereto, to prevent endwise movement of the bush, but such expedients can be unreliable or involve extra operations in production.

According to the invention, we provide a composite spring including at least one end fitting comprising a bush adapted to receive a mounting bolt or the like and secured to the spring by a clamping member extending around part of the periphery of the bush and embracing a part of the spring and secured thereto, wherein the clamping member and bush are held together by projection welding.

The bush is preferably a metal-rubber-metal bush, such as is commonly used in spring mounting applications for motor vehicles. It has been found that by use of the technique of projection welding for securing the bush to the clamping member, damage to the rubber element of the bush due to heat from the welding process does not occur, or is negligible. This is because of the very short length of time for which the welding current flows during the weldir operation, and the "heat sink" effect of the metal elemer of the bush. Even if some degradation of the rubber in tl bush does occur it is extremely localised and does nc affect the performance of the bush as a whole.

If the spring is one intended for heavy dut application, eg in a large commercial vehicle, large force have to be resisted and a clamping member of larg dimensions may be necessary, such that even to projectic weld it to the bush may heat the bush sufficiently to caus damage.

In this case, the invention provides that a number c individual clamping members may be utilised, dispose alongside one another and each held to the bush b projection welding, such that the welding of each clampin member to the bush individually does not cause sufficien heating thereof to damage the bush. In use, one clampin member would be projection welded to the bush, after which cooling time would be allowed before the next clampin member would be welded. Thus an assembly sufficient to tak the loads encountered in service can be built up, withou damaging the bush. An additional advantage is that a les powerful welding machine would be required to weld th individual clamping members to the bush, compared with tha which would be necessary if a single large clamping membe were used.

The indivdual clamping members may be connected at positional position remote from the bush, eg by spot o projection welding a further element to them. The positio of such further element must be sufficiently far from th bush for heat generated during welding thereof not to affec the bush.

The invention will now be described by way of example with reference to the accompanying drawings, of which

Figure 1 is an elevation of the end of a spring according to the invention

Figure 2 is a section on the line 2-2 of Figure 1.

Figure 3 is a plan view of a modified embodiment of the invention.

Figure 4 is a view of a spring.

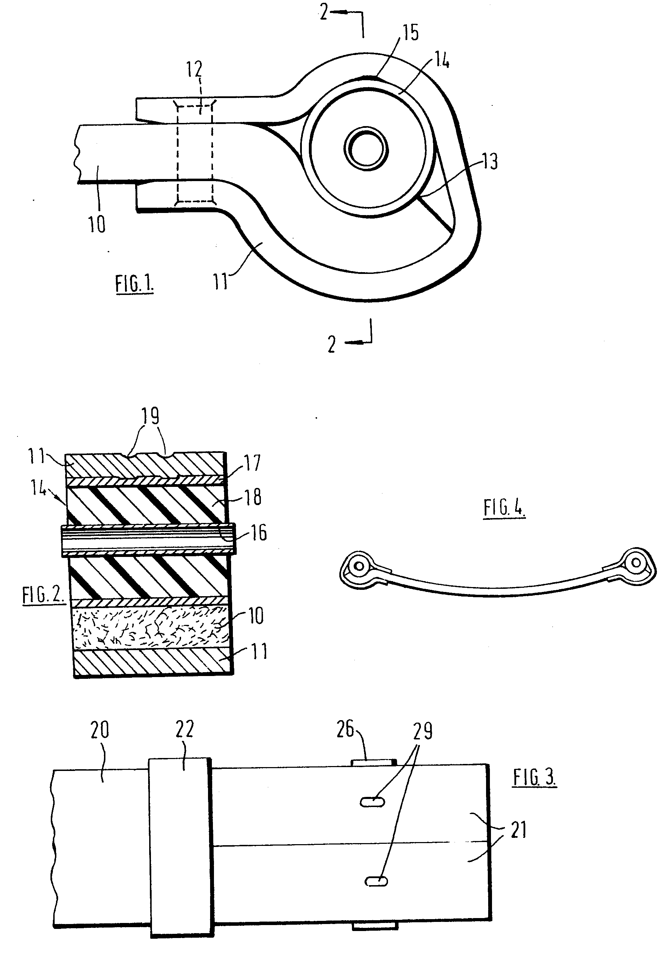

Referring firstly to Figure 1 of the drawings, this shows the end portion of a leaf spring 10 of composite, fibre reinforced resin, material. Adjacent its end, the spring is formed with a transverse recess in which lies a bush 14 for receiving a mounting bolt or the like. The spring extends around the periphery of the bush to a point 13, so that the bush is securely located lengthwise of the spring.

A clamping element 11 of sheet metal extends around the end of the portion of the spring and the bush 14 to hold the bush to the spring. A fastener 12 such as a bolt or rivet secures the clamping element 11 to the spring. The bush 14 is projection welded to the clamping element at 15. The bush is a conventional metal-rubber-metal bush.

Referring to the section shown in Figure 2 this clearly shows the construction of the bush 14 with inner and outer tubular metal elements 16, 17 and the intervening rubber element 18. For welding by the technique known as projection welding, the clamping element 11 is provided externally with indentation 19 which appear inside the clamping element as projections which are the sole contact areas between the clamping element and outer metal element 17 of the bush for

0117704

welding. With these components in their required relative position, electrodes are applied to them and a welding current passed therebetween. Welding occurs where the projections inside the clamping element contact the bush, where the entire current must flow between these components. The result is that the bush is fixed to the clamping element, and thus securely fixed to the spring in service.

Referring now to Figure 3 of the drawings, this is a plan view of an end portion of a leaf spring 20, having two clamping members 21 disposed alongside one another and embracing a bush and spring end portion in the same manner as the embodiment of Figures 1 and 2. The clamping members 21 are secured to the outer tubular metal element of a metal-rubber-metal bush by projection welds 29. The inner tubular metal element of the bush is shown as 26. The clamping members 21 are held together by a member 22, spot or projection welded to the clamping members at a distance from the bush.

As referred to above, the embodiment of Figure 3 is useful where a single clamping member, having the same dimensions as clamping members 21 together, may be such that projection welding it to the bush may heat the bush sufficiently to cause damage. It is possible to avoid this by welding the clamping members 21 individually to the bush, with a suitable cooling time between welding operation.

Referring now to Figure 4 of the drawings, this shows a composite leaf spring suitable for installation in a motor vehicle having two end fittings each of the type described above.

CLAIMS

1.  A composite spring including at least one end fitting comprising a bush (14) adapted to receive a mounting bolt or the like, held to the spring by a clamping member (11, 21) extending around part of the periphery of the bush and embracing a part of the spring and secured thereto, characterised in that the clamping member (11, 21) and bush (17) are held together by projection welding (19, 29).

2.  A composite spring according to Claim 1 further characterised in that the bush is a metal-rubber-metal bush (16, 17, 18).

3.  A composite spring according to Claim 2 further characterised in that there are a number of clamping members (21) disposed alongside one another and each held to the bush by projection welding (29), such that the welding of each clamping member to the bush individually does not cause sufficient heating of the bush to damage it.

4.  A composite spring according to Claim 3 further characterised in that said clamping members are secured together (22) at a position remote from the bush.

5.  A composite spring according to any of the preceding claims further characterised in that said bush lies within a transverse recess at an end portion of the spring.

0117704

FIG.1.

FIG.2.

FIG. 4.

FIG. 3.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,D | EP-A-0 070 122 (GKN TECHNOLOGY LTD.) <br> * Page 3, line 3 - page 4, line 4; page 5, lines 11-17; claims; figures * | 1,2,5 | F 16 F 1/18 <br> B 60 G 11/12 |
| | --- | | |
| Y | US-A-3 784 779 (QUANTA WELDING CO.) <br> * Page 1, column 1, lines 20-29, 53-60; claims * | 1 | |
| | --- | | |
| A | EP-A-0 005 916 (GKN GROUP SERVICES LTD.) <br> * Figures * | 1,2 | |
| | --- | | |
| A | GB-A- 368 126 (SOCIETE ANONYME DES ETABLISSEMENTS REPUSSEAU & CIE.) <br> * Figures * | 1,2 | TECHNICAL FIELDS SEARCHED (Int. Cl. 3) |
| | --- | | |
| A | DE-B-1 219 813 (HEINRICH SCHOMÄCKER & CO.) <br> * Figures * | 1,2 | F 16 F <br> B 60 G <br> B 23 K |
| | ----- | | |

The present search report has been drawn up for all claims

| Place of search | Date of completion of the search | Examiner |
|---|---|---|
| THE HAGUE | 08-05-1984 | FRANKS B.G. |